# FASCICULE DE BREVET EUROPEEN

(11) **EP 1 025 380 B1**
(45) Date de publication et mention de la délivrance du brevet: **06.05.2004**
(21) Numéro de dépôt: 98951546.5
(22) Date de dépôt: 23.10.1998
(51) Int. Cl.: F16K 37/00

(54) **PROCEDE ET DISPOSITIF DE CONTROLE D'UNE VANNE A COMMANDE PNEUMATIQUE**
VERFAHREN UND VORRICHTUNG ZUR REGELUNG EINES PNEUMATISCH BETÄTIGTEN VENTILS
METHOD AND DEVICE FOR CONTROLLING A VALVE WITH PNEUMATIC CONTROL

(30) Priorité: 24.10.1997 FR 9713385
(43) Date de publication de la demande: 09.08.2000
(73) Titulaire: Framatome ANP, 92400 Courbevoie (FR); ELECTRICITE DE FRANCE Service National, 75008 Paris (FR)
(72) Inventeur: FOURCY, Etienne, F-69003 Lyon (FR); GOUBIER, Christian, F-42152 L'Horne (FR); BONNE, Dominique, F-07700 Bourg Saint Andéol (FR); DICQUEMARE, Pascal, F-69009 Lyon (FR); BRIAND, Christophe, F-26700 Pierrelatte (FR)
(74) Mandataire: Bouget, Lucien
(86) Numéro de dépôt international: PCT/FR1998/002277
(87) Numéro de publication internationale: WO 1999/022169

(56) Documents cités:
- WO-A-92/12373
- DE-A- 19 619 285
- US-A- 5 329 956
- US-A- 5 549 137
- US-A- 5 573 032
- PATENT ABSTRACTS OF JAPAN vol. 007, no. 237 (M-250), 21 octobre 1983 & JP 58 124877 A (KANSAI DENRIYOKU KK;OTHERS: 01), 25 juillet 1983

## Description

L'invention concerne un procédé et un dispositif de contrôle d'une vanne à commande pneumatique à fonctionnement tout ou rien.

Dans de nombreuses installations industrielles, on utilise des vannes à commande pneumatique, de manière à arrêter ou à autoriser la circulation d'un fluide dans un circuit de l'installation.

En particulier, dans le cas des réacteurs nucléaires à eau sous pression on utilise de nombreuses vannes à commande pneumatique, comme vannes d'arrêt ou de sectionnement, sur le circuit primaire du réacteur ou sur des circuits en communication directe avec le circuit primaire, tel que le circuit d'injection de sécurité ou le circuit de contrôle chimique et volumétrique du réacteur nucléaire. On utilise également de telles vannes d'arrêt sur le circuit secondaire, comme vannes d'isolement de la vapeur, ou sur les circuits auxiliaires du réacteur nucléaire.

De telles vannes d'arrêt ou d'isolement ont un fonctionnement tout ou rien, la vanne étant commandée pour être placée dans une position de fermeture complète ou dans une position d'ouverture.

De telles vannes comportent un corps de vanne dans lequel sont placés un siège et une butée arrière, un obturateur solidaire d'une tige montée mobile dans le corps de vanne, entre une position de fermeture dans laquelle l'obturateur est en appui sur le siège de vanne et une position d'ouverture dans laquelle la tige de vanne est en appui sur la butée arrière, au moins un moyen de rappel élastique de la tige et de l'obturateur, vers l'une des positions d'ouverture et de fermeture, un actionneur pneumatique ayant une partie mobile reliée à la tige de vanne et une source de gaz sous pression d'alimentation de l'actionneur pneumatique pour déplacer la tige de vanne et l'obturateur vers la position de fermeture ou d'ouverture, à l'encontre des moyens de rappel élastiques.

L'actionneur pneumatique comporte une chambre qui peut être délimitée par une paroi mobile ou un piston, qui est mise en communication avec une source de gaz sous pression par l'intermédiaire d'une ou plusieurs électrovannes.

Lorsqu'on alimente la chambre de l'actionneur pneumatique en gaz sous pression, par l'intermédiaire des électrovannes, la partie mobile de l'actionneur pneumatique se déplace en entraînant un déplacement de la tige et de l'obturateur de vanne, soit dans le sens de l'ouverture, soit dans le sens de la fermeture de la vanne.

Lorsque la chambre de l'actionneur pneumatique n'est pas alimentée en gaz sous pression, ce gaz étant généralement de l'air sous pression, les moyens de rappel élastiques provoquent un déplacement de la tige de vanne et de la partie mobile de l'actionneur pneumatique, dans le sens inverse du précédent, de manière à ramener l'obturateur de la vanne dans une position de fermeture ou d'ouverture de la vanne.

Les électrovannes de commande de l'alimentation de la chambre de l'actionneur pneumatique sont généralement reliées à des moyens de commande qui peuvent être regroupés dans un poste de commande de l'installation. Par exemple, dans le cas des réacteurs nucléaires, les commandes des électrovannes d'alimentation des actionneurs des vannes tout ou rien de la centrale sont regroupées dans la salle de commande du réacteur nucléaire et la position d'ouverture ou de fermeture de ces vannes est visualisée sur des écrans ou des voyants de surveillance.

Dans le cas d'une installation industrielle dont il est important de contrôler le bon fonctionnement, par exemple pour des raisons de sécurité, et en particulier dans le cas d'une centrale nucléaire, il est nécessaire d'effectuer périodiquement un contrôle des vannes d'arrêt des principaux circuits.

Dans le cadre des programmes de maintenance des réacteurs nucléaires, il est prévu des opérations de contrôle systématique des vannes qui peuvent donner lieu à des interventions préventives ou à des réparations sur ces vannes, lors d'un arrêt du réacteur nucléaire suivant le contrôle.

Il peut être nécessaire également d'effectuer certaines interventions sur les vannes, lorsque des défaillances ont été constatées pendant le fonctionnement normal du réacteur nucléaire.

Les interventions effectuées sur les vannes nécessitent le démontage de certaines parties des vannes et l'expérience a montré qu'un pourcentage important de ces interventions n'est pas nécessaire, en regard de l'état de fonctionnement réel de la vanne. On effectue donc inutilement un nombre non négligeable de démontages de vannes, ce qui non seulement peut être long et coûteux mais encore entraîner des risques accrus lors de l'utilisation des vannes, du fait que le remontage de la vanne après l'intervention n'est pas toujours réalisé de manière parfaite.

La maintenance préventive systématique des vannes d'une centrale nucléaire qui nécessite des interventions directes et des démontages sur les vannes peut donc être en fait nuisible en ce qui concerne le bon fonctionnement d'ensemble de la centrale nucléaire.

Dans le cadre de la maintenance périodique des vannes tout ou rien à commande pneumatique des réacteurs nucléaires, on doit contrôler en particulier le tarage des vannes, c'est-à-dire l'effort de l'obturateur de la vanne sur le siège en position fermée et l'effort de la tige de vanne sur la butée arrière en position ouverte ainsi que la course du clapet entre la position d'ouverture et la position de fermeture.

Pour réaliser ces contrôles, on utilise de manière habituelle un procédé dans lequel on désaccouple l'actionneur pneumatique et la partie mobile de la vanne et on intercale entre l'actionneur et la partie mobile, un capteur d'effort avec lequel on mesure les efforts à la fermeture et à l'ouverture de la vanne. La course de la vanne entre ces deux positions, est mesurée à l'aide d'une règle graduée.

Un premier inconvénient de cette méthode classique de contrôle est qu'elle nécessite un désaccouplement de deux organes de la vanne et donc un démontage de la vanne et une intervention dans sa partie interne.

La précision de cette méthode est d'autre part incertaine, du fait de l'utilisation d'un capteur d'effort dans un environnement qui est imposé par la localisation de la vanne et du fait de l'utilisation d'une règle graduée pour mesurer les déplacements.

En outre, le personnel chargé du contrôle doit intervenir à proximité immédiate de la vanne, ce qui augmente les doses d'irradiation accumulées par le personnel d'intervention.

On a proposé de contrôler le tarage de la vanne par une méthode améliorée permettant d'éviter le désaccouplement de l'actionneur pneumatique et de la partie mobile de la vanne tout ou rien. Un ensemble comportant un vérin hydraulique et un capteur d'effort est mis en place sur l'actionneur pneumatique et relié à la tige de commande manuelle de la vanne. Un cycle d'ouverture et de fermeture de la vanne est réalisé en actionnant le vérin, de manière à obtenir un diagramme effort/déplacement.

Un logiciel permet de sélectionner des points caractéristiques du diagramme et de calculer à partir de ces points les valeurs des paramètres nécessaires au contrôle. Ces paramètres sont constitués en particulier par l'effort du clapet sur son siège, l'effort de la partie mobile de la vanne sur le siège arrière, la constante d'élasticité du dispositif de rappel élastique, généralement constitué par des rondelles Belleville, ainsi que la course de la vanne.

Ce procédé présente certains avantages sur le procédé classique décrit plus haut.

En particulier, il n'est plus nécessaire de désaccoupler l'actionneur et la partie mobile de la vanne et, de ce fait, on limite le démontage et les interventions dans une partie interne de la vanne.

D'autre part, l'essai effectué est plus complet, puisqu'en plus des valeurs de tarage de la vanne, on peut déterminer l'effort dû au presse-étoupe et la constante d'élasticité des rondelles Belleville.

Le temps d'intervention des opérateurs à proximité de la vanne est réduit au temps nécessaire pour poser l'ensemble comportant le vérin hydraulique et le capteur d'effort sur la vanne. La suite du contrôle du tarage se fait à distance et de manière automatique à l'aide d'un micro-ordinateur, les doses d'irradiation reçues par les opérateurs étant de ce fait réduites. Les mesures effectuées au cours du cycle d'ouverture et de fermeture sont enregistrées par l'informatique et, de ce fait, la mise en forme, le stockage en mémoire et l'édition des résultats des contrôles sont effectués de manière rapide et avec une très bonne qualité d'exécution.

Enfin, l'effort dû au presse-étoupe est calculé, ce qui permet le réglage de ce presse-étoupe.

Cependant, la méthode présente certains inconvénients. En particulier, elle ne permet de réaliser qu'un diagnostic mécanique sur les vannes fermées par manque d'air, du fait de la réalisation du contrôle à l'aide d'un vérin hydraulique. En outre, la mise en oeuvre du procédé de contrôle nécessite un démontage de la commande manuelle de la vanne pour pouvoir atteindre l'axe de cette vanne.

Le procédé ne peut s'appliquer qu'à des vannes conçues de manière à permettre une fixation d'un vérin sur l'axe de commande manuelle de la vanne. D'autre part, le contrôle étant limité à un diagnostic mécanique, on n'effectue pas un contrôle réel du fonctionnement de la vanne et des composants associés à cette vanne tels que l'électrovanne qui commande l'admission d'air comprimé dans la chambre de l'actionneur.

Il existe donc un besoin concernant un procédé et un dispositif permettant de réaliser un contrôle de vanne tout ou rien à commande pneumatique, sans aucun démontage de la vanne, qui fournisse des valeurs précises des paramètres caractéristiques du fonctionnement de la vanne. Il serait également souhaitable de disposer d'un procédé ou dispositif permettant d'effectuer le contrôle d'une vanne tout ou rien pendant son fonctionnement normal piloté par les moyens de commande de l'installation dans laquelle la vanne est utilisée.

Dans le cas d'une vanne de réglage commandée par un servomoteur, il est connu de réaliser le contrôle de fonctionnement de la vanne en mesurant des paramètres électriques tels que la tension et l'intensité d'alimentation du servomoteur. Pendant le contrôle, l'alimentation électrique du servomoteur de la vanne est réalisée par le dispositif de contrôle et par l'intermédiaire de la chaîne de régulation de la vanne. Le contrôle n'est donc pas effectué sur les moyens de commande normale de la vanne mais sur des moyens d'alimentation électriques se substituant aux moyens intégrés au système de commande de la vanne.

En outre, ce procédé de contrôle n'est applicable qu'aux vannes de réglage commandées par un servomoteur.

Dans le WO-92/12373, on a décrit un dispositif de mesure précis du déplacement d'une tige de vanne commandée par un actionneur alimenté en fluide sous pression. On peut ainsi déterminer le déplacement de la tige de vanne en fonction de la pression d'alimentation de la vanne. Cependant, ces mesures de pression et de déplacement ne sont pas repérées par rapport au cycle réel de fonctionnement de la vanne, c'est-à-dire par rapport aux phases de fermeture (ou d'ouverture) successives de la vanne, dans lesquelles l'obturateur est en contact avec le siège (ou la butée arrière) de la vanne.

Le but de l'invention est donc de proposer un procédé de contrôle d'une vanne à commande pneumatique tout ou rien pour commander la circulation d'un fluide dans une installation, comportant un corps de vanne dans lequel sont placés un siège et une butée arrière, un obturateur solidaire d'une tige montée mobile dans le corps de vanne, entre une position de fermeture dans laquelle l'obturateur est en appui sur le siège de vanne et une position d'ouverture dans laquelle la tige de vanne est en appui sur la butée arrière, au moins un moyen de rappel élastique de la tige de l'obturateur vers l'une des positions d'ouverture et de fermeture, un actionneur pneumatique ayant une partie mobile reliée à la tige de vanne et une source de gaz sous pression d'alimentation de l'actionneur pneumatique par l'intermédiaire d'au moins une électrovanne, pour déplacer la tige de vanne et l'obturateur à l'encontre du moyen de rappel élastique, ce procédé permettant de contrôler de manière sûre et précise le fonctionnement de la vanne, sans qu'il soit nécessaire de réaliser un démontage même limité de cette vanne, et qui puisse être mis en oeuvre pendant le fonctionnement normal de la vanne dans l'installation.

Dans ce but :
- on déplace la tige de l'obturateur de vanne entre les positions d'ouverture et de fermeture à l'aide de l'actionneur pneumatique alimenté en gaz sous pression,
- on mesure, pendant au moins un cycle de déplacement de la tige de vanne, la pression du gaz d'alimentation de l'actionneur et le déplacement de la tige de vanne,
- on repère et on enregistre un signal représentatif de la contrainte subie par la tige pendant le cycle de déplacement, pour déterminer le contact de l'obturateur sur le siège de la vanne, et
- on émet un diagnostic de fonctionnement de la vanne à partir des valeurs mesurées.

De préférence, on enregistre, pendant le cycle de déplacement de la tige et de l'obturateur de la vanne, l'un au moins des signaux représentatifs des fins de course de la tige et de l'obturateur et de commande de l'électrovanne. On enregistre dans tous les cas la contrainte exercée sur la tige pour détecter la mise en contact de l'obturateur avec son siège.

Dans un premier mode de réalisation, on commande l'alimentation en gaz sous pression de l'actionneur pneumatique par une commande d'actionnement normal de la vanne intégrée à l'installation.

Dans un second mode de réalisation, la source de gaz sous pression est un composant d'un ensemble pneumatique d'un dispositif de contrôle de vanne de l'installation permettant de mettre en oeuvre le procédé de l'invention, avec un pilotage précis du débit de gaz sous pression d'alimentation de l'actionneur pneumatique.

Afin de bien faire comprendre l'invention, on va maintenant décrire, à titre d'exemple, en se référant aux figures jointes en annexe, une vanne tout ou rien à commande pneumatique d'une centrale nucléaire et la mise en oeuvre du contrôle de cette vanne par le procédé suivant l'invention et suivant deux modes de réalisation différents.

La figure 1 est une vue en coupe par un plan de symétrie axiale d'une vanne d'arrêt à commande pneumatique d'un circuit de réacteur nucléaire.

La figure 2 est une vue schématique d'un dispositif permettant de réaliser le contrôle de la vanne, suivant un premier mode de réalisation.

La figure 3 est une vue schématique d'un dispositif permettant de mettre en oeuvre le contrôle de la vanne suivant un second mode de réalisation.

La figure 4 est une vue schématique d'une centrale pneumatique utilisée pour la mise en oeuvre du dispositif de contrôle suivant la figure 3.

La figure 5 est un diagramme fonctionnel obtenu par la mise en oeuvre du procédé de l'invention selon le premier mode de réalisation.

La figure 6 est un diagramme représentatif de résultats d'un contrôle réalisé par le procédé selon le second mode de réalisation de l'invention.

La figure 7 est une vue en coupe d'un capteur de déplacement de la partie mobile de la vanne.

La figure 8 est une vue de dessus du capteur de déplacement représenté sur la figure 7.

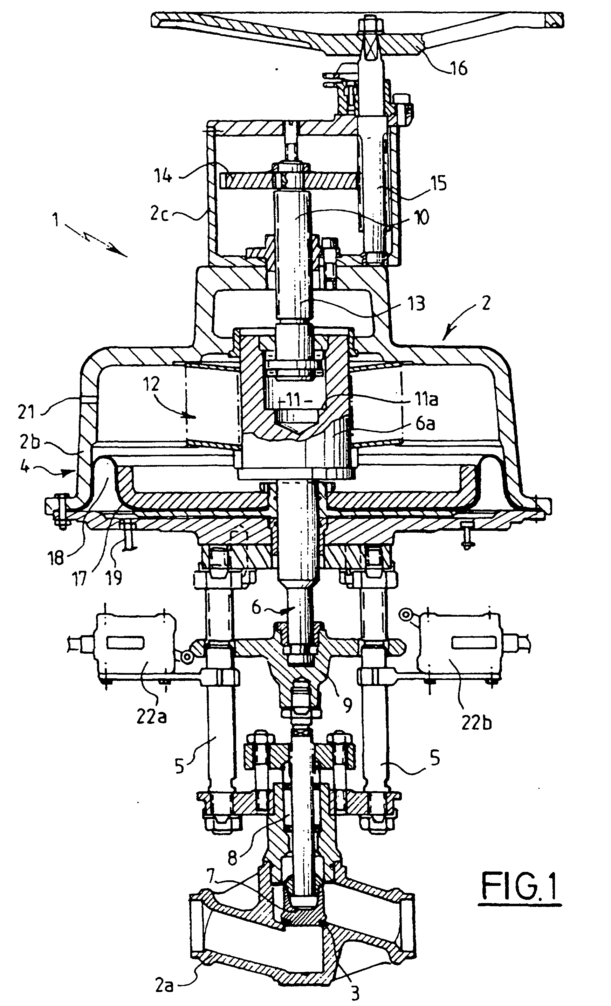

Sur la figure 1, on voit une vanne d'arrêt à commande pneumatique de type tout ou rien désignée de manière générale par le repère 1.

La vanne 1 comporte un corps de vanne constituant la partie fixe de la vanne, désigné de manière générale par le repère 2.

Le corps de vanne 2 comporte une partie 2a intercalée de manière étanche sur une canalisation d'un circuit d'une centrale nucléaire, dans laquelle on commande l'écoulement d'un liquide par l'intermédiaire de la vanne d'arrêt 1.

Dans la partie 2a du corps de vanne est disposé le siège de vanne 3 à travers lequel est assurée la communication entre un premier tronçon de conduit usiné dans la partie 2a du corps de vanne communiquant avec une première partie de la canalisation et un second conduit usiné dans la partie 2a du corps de vanne en communication avec une seconde partie de la canalisation dans laquelle on commande l'écoulement du liquide par l'intermédiaire de la vanne 1.

Le corps de vanne comporte une seconde partie 2b constituant le carter de l'actionneur pneumatique 4 de la vanne, cette seconde partie 2b du corps de vanne étant reliée à la première partie 2a, par l'intermédiaire de colonnes 5.

Le corps de vanne comporte une troisième partie 2c fixée sur la partie supérieure de la partie 2b constituant le carter de l'actionneur pneumatique, cette troisième partie 2c du corps de vanne constituant le carter de la commande manuelle de la vanne.

Dans le corps de vanne 2 est montée la partie mobile de la vanne qui comporte la tige de vanne 6 à l'extrémité de laquelle est fixé l'obturateur 7 destiné à venir reposer dans la position de fermeture de la vanne (position représentée sur la figure 1) sur le siège 3 de la vanne.

La tige de vanne 6, qui comporte un tronçon inférieur solidaire, à son extrémité inférieure, de l'obturateur ou clapet 7, est montée glissante et étanche dans la direction axiale de déplacement de la vanne, dans la partie inférieure 2a du corps de vanne, par l'intermédiaire d'un presse-étoupe 8.

Le tronçon inférieur de la tige de vanne 6 est relié par l'intermédiaire d'une pièce de liaison et de guidage 9 à un tronçon supérieur de la tige monté glissant dans la direction axiale 10 et étanche, dans la partie centrale 2b du corps de vanne constituant le carter de l'actionneur pneumatique 4. La partie supérieure de la tige de vanne 6 comporte une extrémité élargie diamétralement 6a dans laquelle est usinée une cavité 11.

Un ensemble élastique 12 de rappel de la vanne en position de fermeture constitué par un empilement de rondelles Belleville est intercalé entre un rebord d'appui extérieur de la partie 6a de la tige de vanne et la paroi intérieure du carter 2b de l'actionneur pneumatique 4.

L'extrémité inférieure de la tige de commande manuelle 13 de la vanne sur laquelle sont fixées deux butées à bille est montée à l'intérieur de l'ouverture 11 de la partie 6a de la tige de vanne 6, de manière que la tige de commande manuelle 13 puisse se déplacer par rapport à la partie 6a de la tige de vanne, entre une position haute dans laquelle l'une des butées à bille est en appui sur une paroi supérieure de fermeture de la cavité 11 et une position basse dans laquelle la seconde butée à bille est en appui sur un épaulement inférieur 11a de la cavité 11. Lors des déplacements de la tige de vanne 6 et de l'obturateur 7 sous l'effet de l'actionneur pneumatique 4, la tige de vanne et l'obturateur se déplacent entre une position basse de fermeture représentée sur la figure 1 et une position haute d'ouverture dans laquelle le rebord 11a de la cavité 11 vient en appui sur la butée à bille inférieure de la tige de vanne 13 qui constitue la butée arrière du corps de vanne 2, la tige de commande manuelle 13 étant en position fixe pendant l'utilisation normale de la vanne à commande pneumatique.

Dans le cas où la commande pneumatique est défaillante, la commande manuelle peut être utilisée pour ouvrir ou fermer la vanne. Dans ce but, la tige de commande manuelle 13 est solidaire d'une roue dentée 14 qui engrène avec une vis sans fin 15 solidaire d'un volant d'actionnement manuel 16. En faisant tourner de manière manuelle le volant 16 dans un sens ou dans l'autre, on fait monter ou descendre la tige de commande manuelle 13 dont la partie inférieure coopère avec la paroi supérieure de fermeture ou avec le rebord inférieur 11a de la cavité 11 pour ouvrir ou fermer la vanne de manière manuelle.

La partie mobile de la vanne comportant la tige de vanne 6 et l'obturateur 7 est guidée en déplacement axial dans la direction de l'axe 10, en particulier par la pièce de liaison 9 engagée sur les colonnes 5 et par les traversées étanches des parties 2a et 2b du corps de vanne.

L'actionneur pneumatique 4 comporte, à l'intérieur du carter 2b, une membrane 17 fixée de manière étanche à sa périphérie entre deux parties du carter 2b assemblées par des boulons et des écrous.

La membrane 17 délimite, avec la paroi inférieure du carter 2b, la chambre 18 de l'actionneur pneumatique. Deux ajutages tels que 19 permettent de mettre en communication la chambre annulaire 18 de l'actionneur pneumatique avec un circuit d'alimentation en air sous pression, pour réaliser l'actionnement de la vanne.

La membrane 17, qui comporte une ouverture à sa partie centrale, est solidaire d'un équipage monté glissant et étanche sur la tige de vanne et comportant une surface supérieure de poussée sur la partie élargie 6a de la tige de vanne.

Lorsqu'on alimente la chambre 18 en air sous pression, on réalise l'ouverture de la vanne par déformation de la membrane et soulèvement de la tige par l'intermédiaire de l'équipage mobile solidaire de la membrane 17.

Le soulèvement de la vanne à l'ouverture est réalisé à l'encontre de la force de rappel élastique de l'ensemble de rondelles Belleville 12.

La vanne représentée sur la figure 1 est une vanne de fermeture à manque d'air, c'est-à-dire dont la fermeture est assurée par l'ensemble de rappel élastique 12, lorsque la chambre 18 n'est pas alimentée. Dans ce cas, l'obturateur 7 repose sur le siège 3 avec une certaine pression et exerce un effort sur le siège dans la direction axiale.

Lorsque la chambre 18 est alimentée en air comprimé, la déformation de la membrane 17 provoque le soulèvement de la tige de vanne jusqu'au moment où l'épaulement 11a de la cavité 11 vient en appui sur la butée à bille de la tige 13 constituant la butée arrière de la vanne. La tige de vanne, par l'intermédiaire de l'épaulement 11a, exerce une certaine pression et donc un effort dans la direction axiale 10 sur la butée arrière.

Lors du soulèvement de la tige de vanne par l'intermédiaire de la membrane, de l'air contenu dans la partie supérieure du carter 2b de l'actionneur pneumatique est évacué par des ouvertures telles que l'ouverture 21.

L'un des buts du contrôle des vannes tout ou rien à commande pneumatique est de vérifier la valeur de l'effort exercé par la partie mobile de la vanne, sur le siège de vanne dans la position de fermeture, et sur la butée arrière dans la position d'ouverture.

Un autre paramètre dont la valeur doit être mesurée est la course de la partie mobile de la vanne entre sa position de fermeture et sa position d'ouverture.

Sur les colonnes 5 sont fixés des boîtiers de fin de course tels que 22a et 22b qui comportent chacun une tige d'actionnement dont la partie d'extrémité vient en contact avec la partie externe de la pièce de liaison et de guidage 9 de la tige 6, en fin de déplacement de la partie mobile de la vanne vers le bas, c'est-à-dire vers la position de fermeture et vers le haut, c'est-à-dire vers la position d'ouverture.

L'actionnement des butées de fin de course 22a et 22b permet d'actionner des électrovannes du circuit pneumatique d'alimentation de l'actionneur pneumatique 4 pour couper l'alimentation de la chambre 18 de l'actionneur pneumatique en air comprimé.

Le procédé de l'invention permet de réaliser le contrôle de fonctionnement d'une vanne tout ou rien à commande pneumatique et en particulier de déterminer les valeurs de l'effort sur la partie mobile de la vanne dans les positions de fermeture ou d'ouverture et la course de la partie mobile.

Le procédé suivant l'invention permet également de vérifier d'autres paramètres caractéristiques du bon fonctionnement de la vanne.

Comme indiqué plus haut, il est souhaitable de disposer de méthodes de contrôle des vannes tout ou rien à commande pneumatique qui ne nécessitent pas de démontage d'une partie de la vanne, qui soient précises et fiables et qui puissent être mises en oeuvre sur l'installation comportant la vanne, alors que cette installation est en fonctionnement.

Une telle méthode de contrôle doit permettre d'éviter d'effectuer des démontages inutiles des vannes, lors des périodes d'arrêt de l'installation.

En fait, le contrôle des vannes d'une installation telle qu'une centrale nucléaire peut être effectué à plusieurs niveaux, suivant les raisons qui ont nécessité le contrôle.

Dans le cas où l'on détecte, pendant le fonctionnement de l'installation sur laquelle est placée la vanne, une anomalie qui peut être due à la vanne ou encore dans le cas où l'on s'attend à un fonctionnement défectueux de cette vanne, il est nécessaire de mettre en oeuvre un contrôle qui doit permettre de vérifier rapidement si la vanne présente effectivement un comportement défectueux ou anormal.

Ce contrôle est appelé contrôle fonctionnel ou test de maintenance de niveau 1 et doit être mis en oeuvre de manière facile sur l'installation maintenue en fonctionnement. On peut ainsi détecter des anomalies bénignes qui ne nécessitent pas la mise en oeuvre d'une intervention importante sur la vanne. On peut par exemple effectuer une action correctrice simple sur la vanne ou prendre certaines dispositions qui sont prévues dans les règles de fonctionnement de l'installation.

Dans le cas où une maintenance de niveau 1 n'a pas permis d'identifier l'origine de l'anomalie de fonctionnement ou encore dans le cas où l'on veut obtenir des renseignements plus précis que ceux fournis par la maintenance de niveau 1 sur cette anomalie, on met en oeuvre un deuxième niveau de contrôle appelé contrôle ou maintenance de niveau 2, ce contrôle nécessitant des conditions de mise en oeuvre plus contraignantes que le contrôle de niveau 1.

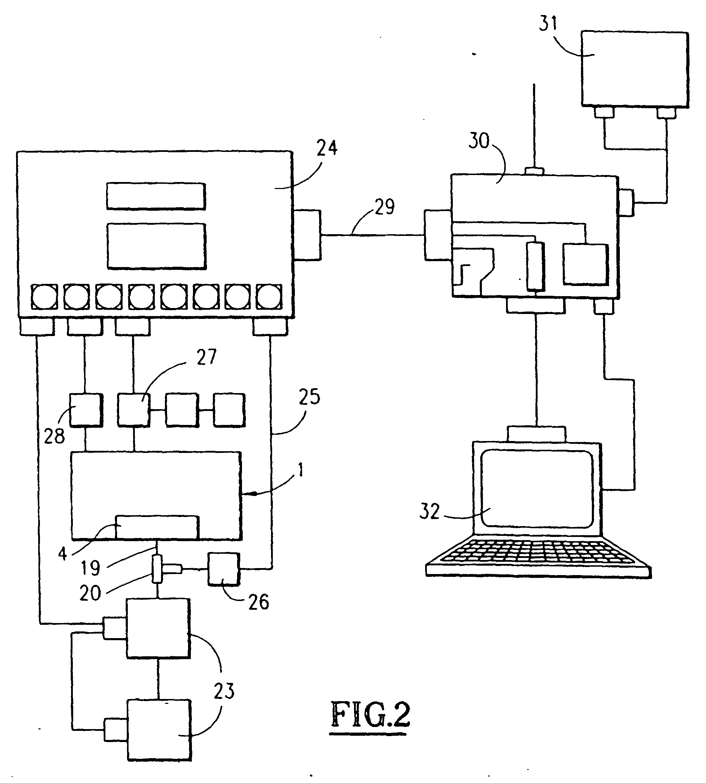

Dans le cas d'une vanne tout ou rien située sur un circuit d'une centrale nucléaire, on peut réaliser un contrôle ou maintenance de niveau 1 en utilisant un dispositif tel que représenté sur la figure 2. De manière générale, le diagnostic de niveau 1 est réalisé sur la vanne 1 commandée depuis la salle de commande du réacteur nucléaire, de manière que la partie mobile de la vanne effectue au moins un cycle complet de déplacement entre les positions d'ouverture et de fermeture de la vanne.

Pendant ce déplacement de la partie mobile de la vanne, des capteurs associés à la vanne permettent de déterminer si les caractéristiques de fonctionnement de la vanne sont satisfaisantes.

Sur la figure 2, on a représenté la vanne tout ou rien 1 de manière conventionnelle par un rectangle et l'actionneur pneumatique 4 de la vanne par un second rectangle à l'intérieur du rectangle représentant la vanne.

L'actionneur pneumatique 4 est alimenté en air comprimé par l'intermédiaire d'au moins une électrovanne 23 commandée depuis la salle de commande du réacteur nucléaire, de manière à permettre l'introduction d'air comprimé provenant d'un circuit ou d'un réservoir constituant un composant de l'installation, dans l'actionneur pneumatique 4 de la vanne 1 pour réaliser l'actionnement de la vanne à l'ouverture ou, au contraire, pour couper l'alimentation de l'actionneur de manière que les moyens de rappel élastiques de la vanne assurent sa fermeture.

Les électrovannes 23 sont associées à des capteurs à effet Hall qui permettent de déterminer et d'enregistrer les phases de fonctionnement des électrovannes 23, par enregistrement d'un signal de commande des électrovannes.

Le dispositif de contrôle comporte un boîtier de conditionnement 24 comportant des entrées et des sorties analogiques ainsi que des entrées et des sorties numériques, pour assurer le recueil et la transmission des signaux fournis par les capteurs associés à la vanne et à ses moyens de commande.

En particulier, les capteurs à effet Hall des électrovannes 23 sont reliés au boîtier de conditionnement 24.

Un T de raccordement 20 est fixé sur un ajutage 19 de la chambre de l'actionneur pneumatique 4 de manière à assurer le raccordement d'une conduite 25 sur laquelle est disposé un capteur de pression 26, à l'alimentation de la chambre de l'actionneur pneumatique. De ce fait, le capteur de pression 26 mesure la pression d'alimentation de l'actionneur pneumatique et transmet un signal au boîtier de conditionnement 24 représentatif de la pression mesurée.

Des détecteurs 27 associés aux boîtiers de fin de course 22a et 22b de la vanne sont reliés également au boîtier 24, de manière à transmettre à ce boîtier des signaux représentatifs de l'actionnement des butées de fin de course et donc de la position de la partie mobile de la vanne.

Un capteur 28 du déplacement linéaire dans la direction de l'axe 10 de l'ensemble mobile de la vanne est également relié au boîtier 24.

Le boîtier de conditionnement 24 est disposé à proximité de la vanne 1, c'est-à-dire dans une partie du réacteur nucléaire comportant le circuit ou la canalisation sur laquelle est disposée la vanne d'arrêt 1.

Le boîtier 24 est relié par un câble de liaison 29 à un boîtier de raccordement 30 disposé à une certaine distance de la zone du réacteur nucléaire dans laquelle est située la vanne 1.

Par exemple, on peut utiliser un câble de liaison 29 d'une longueur de 10 à 30 m et placer le boîtier de raccordement 30 dans une salle de repli non radioactive.

Le boîtier de raccordement 30 est relié à des moyens d'alimentation électrique 31 tels qu'une batterie et les signaux conditionnés transmis par le câble 29 et récupérés par le boîtier de raccordement 30 sont traités dans un micro-ordinateur 32 qui assure en particulier le stockage et l'affichage des informations obtenues à partir des capteurs pendant le fonctionnement de la vanne 1 commandée depuis la salle de commande.

La vanne 1 est commandée de manière que sa partie mobile effectue au moins un cycle complet de déplacement entre les positions d'ouverture et de fermeture de la vanne.

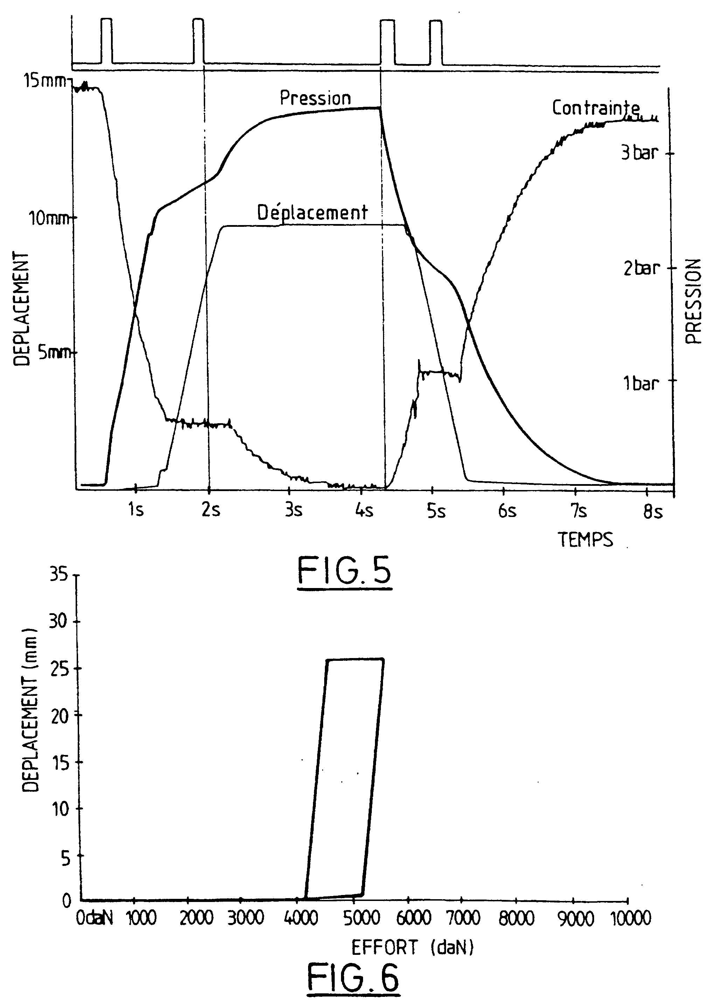

Sur la figure 5, on a représenté sous forme d'un diagramme les principaux paramètres mesurés ou déterminés par le dispositif de contrôle, en fonction du temps.

On a ainsi représenté sur la figure 5 les variations, au cours du temps, pendant le déplacement de la partie mobile de la vanne, de la pression d'alimentation de l'actionneur pneumatique, le déplacement de la partie mobile de la vanne et la contrainte mesurée dans la tige de la vanne.

On effectue également un calcul de la contrainte exercée sur la tige de vanne pendant le cycle de déplacement et lorsque la vanne est en position de fermeture ou d'ouverture.

La mesure de contrainte exercée sur la tige de la vanne permet de repérer le contact de l'obturateur de la vanne avec le siège sur lequel vient reposer l'obturateur, dans sa position de fermeture.

De plus, comme représenté dans la partie supérieure du diagramme de la figure 5, on enregistre les signaux des contacteurs de fin de course et les signaux de commande de l'électrovanne de manière à contrôler complètement le déroulement du cycle de fonctionnement de la vanne.

Le diagramme tel que représenté sur la figure 5 peut être obtenu par affichage sur l'écran associé au micro-ordinateur 32 ou imprimé à partir du micro-ordinateur.

Le temps est mesuré en continu pendant la manoeuvre de la vanne.

Dans un premier temps, la vanne étant maintenue fermée par l'ensemble de rappel élastique 12, la tige subit une contrainte de compression maximale transmise à l'obturateur qui est comprimé sur le siège de vanne. Pour déclencher l'ouverture de la vanne, le signal de commande de l'électrovanne assure l'alimentation de la chambre 18 en fluide sous pression (signal de pression croissant). La contrainte de compression dans la tige diminue puis s'annule. L'obturateur de la vanne se décolle du siège au début du déplacement. La tige est alors sollicitée en traction. Les frottements de la tige sur le presse-étoupe 8 se traduisent par un premier palier de contrainte dans la tige pendant le déplacement de la tige. Le déplacement de la tige et de l'obturateur est stoppé par la butée arrière. Pour réaliser la fermeture de la vanne, on émet un signal de commande pour relâcher la pression dans la chambre 18 de la vanne. La contrainte de traction dans la tige de vanne diminue jusqu'à un second palier dû aux frottements sur le presse-étoupe 8 pendant le déplacement, puis s'annule ; la contrainte de compression augmente à nouveau lorsque l'obturateur vient en contact avec le siège de vanne. La contrainte dans la tige augmente du fait de la compression de l'obturateur sur le siège de vanne jusqu'à la fermeture complète.

La mesure de contrainte dans la tige de vanne permet donc de suivre parfaitement les phases d'ouverture et de fermeture de la vanne.

On peut émettre un diagnostic concernant le fonctionnement de la vanne, soit par comparaison directe du diagramme, par exemple en ce qui concerne la variation au cours du cycle de fonctionnement de la pression d'alimentation de l'actionneur pneumatique et le déplacement de la partie. mobile de la vanne, avec des relevés correspondant à un fonctionnement parfait de la vanne tout ou rien.

On effectue aussi certains calculs à partir des diagrammes pour déterminer certaines caractéristiques de fonctionnement de la vanne, telles que le temps de manoeuvre pour l'ouverture ou la fermeture de la vanne, la course de la partie mobile entre l'ouverture et la fermeture, le temps d'ouverture des électrovannes, les temps de retard d'établissement de la pression et du déplacement et la position des fins de course dans le cycle de fonctionnement de la vanne.

Le contrôle de niveau 1 de la vanne, qui est réalisé en commandant la vanne depuis la salle de commande, est réalisé sans aucun démontage de la vanne et sans aucune utilisation de dispositif annexe de déplacement de la partie mobile de cette vanne.

En outre, l'utilisation de capteurs appropriés permet de réaliser un contrôle des paramètres de fonctionnement de la vanne tels que la position des fins de course et les caractéristiques d'ouverture des électrovannes.

Ces essais sont effectués sans qu'il soit nécessaire qu'un opérateur intervienne au voisinage de la vanne, ce qui présente bien sûr un très grand intérêt en ce qui concerne la limitation des doses reçues par les opérateurs chargés du contrôle.

En outre, le contrôle est effectué alors que le réacteur nucléaire est en fonctionnement, sans interférer avec ce fonctionnement et sans qu'il soit nécessaire de recourir à une procédure particulière pour la conduite du réacteur nucléaire.

Cependant, dans le cas où l'on n'a pu déceler une anomalie sur la vanne ou l'origine d'une anomalie décelée, il est nécessaire d'effectuer un diagnostic par un contrôle de niveau 2.

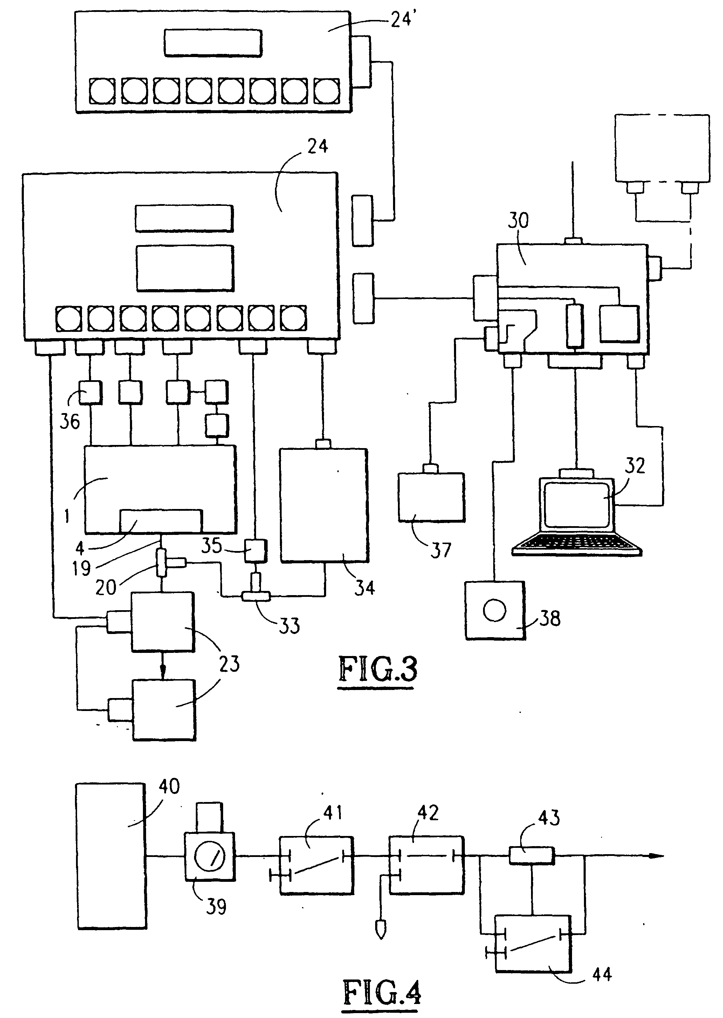

On utilise alors le dispositif tel que représenté sur la figure 3.

Ce dispositif est sensiblement analogue au dispositif nécessaire pour la mise en oeuvre du contrôle de niveau 1 représenté sur la figure 2. Les éléments correspondants sur les figures 1 et 2 sont affectés des mêmes repères.

La différence essentielle entre le dispositif utilisé pour la maintenance de niveau 1, représenté sur la figure 2, et le dispositif utilisé pour la maintenance de niveau 2, représenté sur la figure 3, réside dans la présence d'un ensemble pneumatique 34 relié à l'alimentation de l'actionneur pneumatique au niveau du T 20.

L'ensemble pneumatique 34 qui comporte une réserve d'air comprimé ou qui peut être relié au circuit d'air comprimé de l'installation est commandé par son propre dispositif de pilotage qui permet de délivrer à l'actionneur pneumatique de la vanne 1, un débit d'air sous pression contrôlé de manière précise. De cette manière, on peut actionner lentement la vanne 1 par l'intermédiaire de son actionneur 4 de manière à réaliser, pendant le cycle de déplacement de la vanne, un relevé précis de la pression d'alimentation de l'actionneur pneumatique et du déplacement de la partie mobile de la vanne.

Pour réaliser les mesures de pression, on place un capteur de pression 35 en dérivation sur la conduite d'alimentation de l'actionneur pneumatique à partir de l'ensemble pneumatique 34, par l'intermédiaire d'un raccord en T 33. Le capteur 35 est relié au boîtier de conditionnement 24, de manière à transmettre les signaux de pression.

Les capteurs utilisés dans le cas du dispositif effectuant la maintenance de niveau 2 sont pratiquement les mêmes que les capteurs utilisés dans le cas du dispositif effectuant la maintenance de niveau 1. On utilise un capteur 36 de mesure de l'effort exercé sur la tige de vanne pour déterminer le cycle de fermeture et d'ouverture de la vanne. On mesure au cours du cycle une contrainte minimale qui correspond à l'ouverture, une contrainte maximale correspondant à la fermeture. L'effort exercé sur la tige de vanne est également calculé à partir de la pression mesurée par le capteur 35 en tenant compte de la surface utile de la membrane sur laquelle s'exerce la pression pneumatique dans l'actionneur. On calcule une valeur de la surface de la membrane, dite surface "équivalente" permettant d'obtenir une valeur précise de l'effort. Le calcul ou les valeurs de la surface équivalentè de la membrane sont introduits dans le micro-ordinateur 32 de manière que le micro-ordinateur puisse calculer la valeur de l'effort à partir de la pression et de la surface équivalente.

On obtient donc, pendant tout le cycle d'essai de la vanne, un diagramme effort/déplacement qui permet de vérifier de manière très précise le fonctionnement mécanique de la vanne.

Un tel diagramme a été représenté sur la figure 6 sur lequel l'effort est porté en abscisse et le déplacement en ordonnée.

A partir d'un diagramme tel que le diagramme représenté sur la figure 6, on peut émettre un diagnostic très précis et très sûr sur le fonctionnement de la vanne et déterminer certains paramètres de contrôle.

On peut déterminer en particulier les efforts sur le clapet ou la tige de vanne dans la position de fermeture et d'ouverture de la vanne ainsi que la course de la partie mobile de la vanne entre ces deux positions.

On peut également déterminer de manière précise l'effort exercé par le presse-étoupe sur la tige de vanne et la raideur ou constante élastique du dispositif de rappel constitué généralement par les rondelles Belleville.

Il est à remarquer que le contrôle ou maintenance de niveau 2 est plus délicat à réaliser que le contrôle de niveau 1, avec l'installation en fonctionnement, par exemple sur une ou plusieurs vannes d'un circuit d'un réacteur nucléaire en fonctionnement. Dans ce cas, il est nécessaire d'adapter la procédure de conduite de l'installation telle qu'un réacteur nucléaire, aux conditions de l'essai.

En revanche, le procédé de contrôle de niveau 2 est très facile à mettre en oeuvre lorsque le réacteur nucléaire est à l'arrêt. Ce procédé donne accès directement à des données d'ordre mécanique calculées par le logiciel du micro-ordinateur 32, à partir du diagramme effort/déplacement de la vanne.

Le contrôle de niveau 2 peut être utilisé pour fournir un diagnostic sur l'état de fonctionnement de la vanne après une intervention et ainsi fournir un rapport de contrôle de fin d'intervention sur la vanne. On peut ainsi donner une appréciation sur la qualité de l'intervention et vérifier le tarage de l'actionneur pneumatique de la vanne, la course de la partie mobile de la vanne et le bon état du dispositif élastique de rappel.

Bien entendu, on peut réaliser les deux types de contrôle de niveau 1 et de niveau 2 pour toute vanne à commande pneumatique tout ou rien, que cette vanne soit à membrane ou à piston ou d'un autre type. Dans le cas d'une vanne à membrane, le procédé est applicable aussi bien à une vanne comportant une simple membrane et une seule chambre qu'à une vanne comportant une double membrane et deux chambres.

La possibilité de réunir les moyens pour effectuer les deux niveaux de contrôle dans un même ensemble permet au procédé et au dispositif selon l'invention d'effectuer toutes les étapes nécessaires pour effectuer une maintenance conditionnelle des vannes tout ou rien, c'est-à-dire une maintenance évitant des démontages et des interventions inutiles sur des vannes non défectueuses.

Le contrôle de niveau 2 effectué par le procédé de l'invention peut fournir des résultats, c'est-à-dire un diagramme effort/déplacement représentant la caractéristique de la vanne pratiquement identique et superposable à celui qui serait obtenu par la méthode antérieure connue dans le cas des vannes à fermeture par manque d'air d'un type permettant la fixation sur la tige de vanne d'un vérin hydraulique.

Bien entendu, il est également possible d'équiper le dispositif de contrôle de niveau 2 selon l'invention représenté sur la figure 3 d'un groupe hydraulique 37 alimentant un vérin d'actionnement de la tige de vanne. Dans ce cas, il est possible de comparer les résultats obtenus en actionnant la vanne par l'ensemble pneumatique 34 et l'actionneur pneumatique 4 et les résultats obtenus en actionnant la vanne à partir du groupe hydraulique 37. On peut ainsi obtenir une continuité entre les résultats obtenus par le procédé de contrôle selon l'art antérieur qui ont été archivés et les résultats obtenus par le procédé de l'invention.

De manière à limiter les modifications à faire subir au dispositif de contrôle pour mettre en oeuvre la maintenance de niveau 2, il est possible d'adjoindre un clapet de fermeture au T 33 de raccordement du capteur de pression 35 pour refermer de manière étanche la canalisation mettant en communication l'ensemble pneumatique 34 et le piquage 19. On peut ainsi mettre en fonctionnement ou isoler la partie du dispositif utilisée au cours de la maintenance de niveau 2.

Pour accroître la capacité du dispositif de contrôle, on peut adjoindre au boîtier de conditionnement 24 un boîtier d'extension 24' connecté au boîtier 24.

On peut également prévoir, dans la salle de commande du réacteur, un boîtier de commande manuelle 38.

Comme il est visible sur la figure 4, l'ensemble pneumatique 34 peut être constitué par une réserve d'air 40 qui peut être par exemple un réservoir, une bouteille ou un circuit d'air comprimé de la centrale nucléaire, par un régulateur de débit 39, des électrovannes 41 et 42 en série et un limiteur de débit 43 en parallèle avec une troisième électrovanne 44.

On peut ainsi régler parfaitement le débit d'air comprimé envoyé à l'actionneur pneumatique pour obtenir des mesures et une détermination précise du diagramme effort/déplacement de la vanne.

La centrale pneumatique peut être commandée par l'opérateur, à partir du boîtier de commande manuelle 38.

Pour mesurer de manière précise le déplacement de la partie mobile de la vanne, on peut utiliser soit un capteur de déplacement laser soit un capteur de déplacement potentiométrique.

Le capteur de déplacement laser comporte un bras de fixation permettant de le placer au voisinage d'une partie apparente de la tige de vanne 6 et de régler le faisceau laser. Le faisceau laser permet de repérer une zone ponctuelle de la tige de vanne présentant certaines caractéristiques optiques du fait de sa rugosité. Le déplacement de cette zone repérée est comparé à la dimension d'une fenêtre optique de dimensions connues.

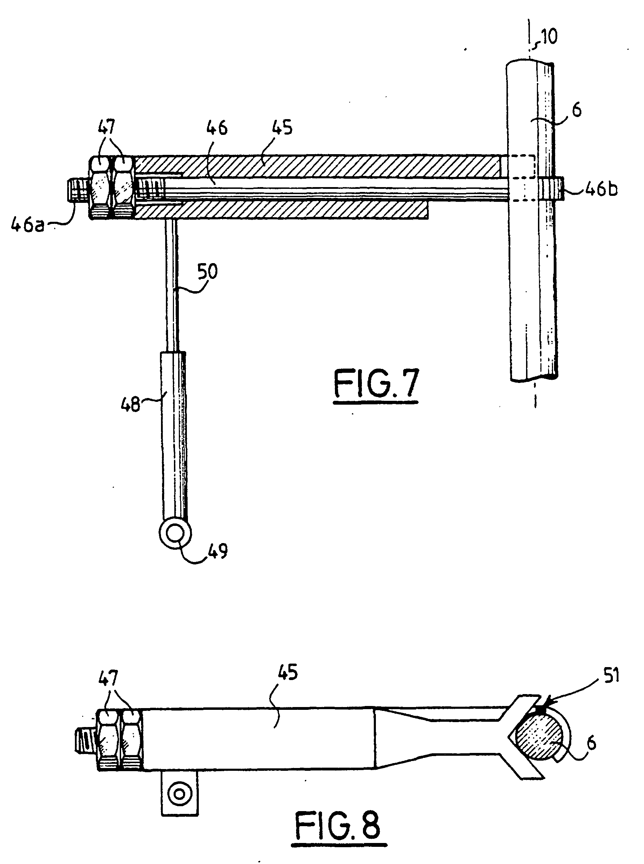

Comme il est visible sur les figures 7 et 8, le capteur potentiométrique comporte un bras 45 ayant un alésage intérieur dans lequel est montée une tige 46 comportant une extrémité filetée 46a et une seconde extrémité opposée à l'extrémité 46a constituant une crosse 46b dont le rayon de courbure interne permet à la crosse 46b d'épouser la forme de la tige 6 de la vanne. Le bras 45 comporte une extrémité en forme de V dont l'ouverture permet de recevoir une partie de la tige de vanne 6 sur laquelle est engagée la crosse 46b.

Sur l'extrémité filetée 46a de la tige de serrage 46 sont vissés des écrous de serrage et de blocage 47 permettant d'exercer une traction sur la tige 46 pour assurer le serrage de la partie de tige de vanne 6 entre le Vé de positionnement du bras 45 et la crosse 46b. L'écrou de blocage permet d'assurer le maintien de la tige de serrage 46, de telle sorte que le bras 45 soit solidaire de la tige de vanne 6 et disposé dans une direction sensiblement perpendiculaire à l'axe 10 de la tige 6.

Le capteur de déplacement est constitué par une bobine 48 dans laquelle peut se déplacer, à la manière d'un noyau plongeur, une tige 50 dont l'extrémité est rappelée en contact avec le bras 45. De cette manière, la tige mobile 50 suit les déplacements de la tige de vanne 6, ces déplacements étant mesurées de manière très précise par la bobine 48 du capteur de mesure de déplacement. La bobine 48 est reliée, en 49, de manière rigide à un point fixe par rapport au corps de vanne.

De préférence, le bras 45 du capteur peut être fixé à la tige de vanne 6 dans une zone de cette tige au-dessus de l'accouplement robinet 2a-actionneur 2b (voir figure 1 ).

Une jauge de contrainte 51 est intégrée dans la crosse de serrage 46b de la tige 46, de manière à mesurer les variations de contraintes dues aux variations de diamètre de la tige 6 sous l'effet des efforts subis pendant la manoeuvre de la vanne. On peut obtenir ainsi une mesure précise de l'effort exercé sur la tige de vanne 6.

Le basculement des organes mobiles des butées de fin de course 22a et 22b de la vanne peut être détecté et enregistré de manière précise pendant le contrôle de la vanne en utilisant des capteurs acoustiques fixés sur les boîtiers de fin de course 22a et 22b. L'émission des ondes acoustiques accompagnant le basculement des contacteurs de fin de course est repérée sur l'échelle de temps, pendant le cycle de déplacement de la partie mobile de la vanne.

Il est également possible d'utiliser, pour détecter et enregistrer les fins de course, des capteurs constitués par des pinces ampèremétriques captant le passage du courant lors du basculement du contacteur de fin de course.

Le signal de commande de l'électrovanne ou des électrovannes d'admission d'air dans l'actionneur pneumatique est détecté, comme indiqué plus haut, par des capteurs à effet Hall.

Le micro-ordinateur 32 peut être constitué par tout micro-ordinateur portable associé à une imprimante et comportant une carte d'acquisition. Le boîtier de raccordement 30 permet de faciliter la connexion du micro-ordinateur dont les connexions ne sont pas susceptibles de supporter des efforts. Le boîtier de raccordement est équipé d'un dispositif d'arrêt d'urgence.

Le micro-ordinateur 32 permet en particulier d'éditer des rapports d'essais qui peuvent être sélectionnés en fonction de certains critères relatifs aux essais ou aux vannes concernées par les essais. On peut éditer des tableaux de synthèse et mettre en mémoire les données de contrôle concernant une vanne pour éditer des historiques relatifs à cette vanne.

De manière générale, le procédé et le dispositif suivant l'invention permettent de réaliser des contrôles précis et fiables des vannes tout ou rien à commande pneumatique d'une installation telle qu'une centrale nucléaire, sans nécessiter de démontage ou d'intervention au niveau de la vanne. Le contrôle peut être effectué pendant le fonctionnement de l'installation, sans condition particulière pour l'utilisation de l'installation pendant le contrôle ou avec certaines conditions d'utilisation.

Le procédé et le dispositif suivant l'invention permettent d'effectuer aussi bien un contrôle rapide de niveau 1 qu'un contrôle plus précis de niveau 2 avec une mesure précise de la caractéristique effort/déplacement de la vanne.

Le procédé et le dispositif de l'invention permettent de réaliser un diagnostic fonctionnel d'ensemble sur les vannes d'arrêt tout ou rien à commande pneumatique et sur leur dispositif de commande.

Le dispositif suivant l'invention peut également permettre de réaliser des essais selon la technique de l'art antérieur, en utilisant une installation hydraulique annexe.

L'invention s'applique non seulement aux vannes d'arrêt ou de sectionnement des circuits des centrales nucléaires mais également à toute vanne d'arrêt à commande pneumatique d'une installation industrielle quelconque.

## Revendications

1. Procédé de contrôle d'une vanne (1) à commande pneumatique tout ou rien pour commander la circulation d'un fluide dans une installation, comportant un corps de vanne (2) dans lequel sont placés un siège (3) et une butée arrière (13), un obturateur (7) solidaire d'une tige (6) montée mobile dans le corps de vanne (2), entre une position de fermeture dans laquelle l'obturateur (7) est en appui sur le siège de vanne (3) et une position d'ouverture dans laquelle la tige de vanne (6) est en appui sur la butée arrière (13), au moins un moyen de rappel élastique (12) de la tige (6) et de l'obturateur (7), vers l'une des positions d'ouverture et de fermeture, un actionneur pneumatique (4) ayant une partie mobile (17) de déplacement de la tige de vanne (6) et une source de gaz sous pression (34) d'alimentation de l'actionneur pneumatique (4), par l'intermédiaire d'au moins une électrovanne (23), pour déplacer la tige de vanne (6) et l'obturateur (7) à l'encontre du moyen élastique (12), **caractérisé par le fait :**
- **qu'**on déplace la tige (6) et l'obturateur (7) de la vanne (1) entre les positions d'ouverture et de fermeture, à l'aide de l'actionneur pneumatique (4) alimenté en gaz sous pression,
- **qu'**on mesure, pendant au moins un cycle de déplacement de la tige de vanne (6), la pression d'alimentation de l'actionneur pneumatique (4) et le déplacement de la tige de vanne (6),
- **qu'**on repère et qu'on enregistre un signal représentatif de la contrainte subie par la tige (6) pendant le cycle de déplacement, pour déterminer le contact de l'obturateur (7) sur le siège (3) de la vanne (1 ), et
- **qu'**on émet un diagnostic de fonctionnement de la vanne (1), à partir des valeurs mesurées.

2. Procédé suivant la revendication 1, **caractérisé par le fait qu'**on commande l'alimentation en gaz sous pression de l'actionneur (4) de la vanne (1) par une commande d'actionnement normal de la vanne (1) de l'installation.

3. Procédé suivant la revendication 2, **caractérisé par le fait qu'**on repère et qu'on enregistre, pendant le cycle de déplacement de la tige de vanne (6), le déclenchement de contacteurs de fin de course (22a, 22b) de la vanne (1).

4. Procédé suivant l'une quelconque des revendications 2 et 3, **caractérisé par le fait qu'**on capte et qu'on enregistre, pendant le cycle de déplacement de la tige (6) de la vanne, un signal de commande de l'électrovanne (23) commandant l'alimentation de l'actionneur pneumatique (4).

5. Procédé suivant la revendication 1, **caractérisé par le fait qu'**on alimente l'actionneur pneumatique (4) de la vanne (1) en gaz sous pression, à partir d'un ensemble pneumatique (34) comportant une réserve de gaz sous pression et des moyens de pilotage précis du débit de gaz sous pression d'alimentation de l'actionneur pneumatique (4).

6. Procédé selon la revendication 5, **caractérisé par le fait qu'**on calcule, à partir de la pression mesurée du gaz d'alimentation de l'actionneur pneumatique (4) et d'une surface d'actionnement de l'actionneur (4), l'effort exercé sur la tige de vanne (6) et qu'on trace un diagramme effort/déplacement de la tige de vanne constituant une caractéristique du fonctionnement mécanique de la vanne.

7. Procédé suivant la revendication 6, **caractérisé par le fait qu'**on détermine, à partir du diagramme effort/déplacement de la vanne, la course de la tige (6) de la vanne entre la position de fermeture et la position d'ouverture de la vanne et l'effort exercé sur la tige de vanne (6) dans la position de fermeture et dans la position d'ouverture de la vanne, la tige de vanne étant en appui sur le siège de vanne (3) et sur la butée arrière (13), respectivement.

8. Procédé suivant l'une quelconque des revendications 6 et 7, **caractérisé par le fait qu'**on détermine, à partir du diagramme effort/déplacement de la vanne, la constante élastique du moyen de rappel élastique de la tige de vanne (6).

9. Procédé suivant l'une quelconque des revendications 6 à 8, **caractérisé par le fait qu'**on détermine à partir du diagramme effort/déplacement de la vanne, l'effort exercé sur la tige de vanne par un presse-étoupe (8) disposé dans une partie (2a) du corps de vanne (2).

10. Dispositif de contrôle d'une vanne (1) à commande pneumatique tout ou rien, pour commander la circulation d'un fluide dans une installation, comportant un corps de vanne (2) dans lequel sont placés un siège (3) et une butée arrière (13), un obturateur (7) solidaire d'une tige (6) montée mobile dans le corps de vanne (2), entre une position de fermeture dans laquelle l'obturateur (7) est en appui sur le siège de vanne (3) et une position d'ouverture dans laquelle la tige de vanne (6) est en appui sur la butée arrière (13), au moins un moyen de rappel élastique (12) de la tige (6) et de l'obturateur (7), vers l'une des positions d'ouverture et de fermeture, un actionneur pneumatique (4) ayant une partie mobile (17) de déplacement de la tige de vanne (6) et une source de gaz sous pression (34) d'alimentation de l'actionneur pneumatique (4), par l'intermédiaire d'au moins une électrovanne (23), pour déplacer la tige de vanne (6) et l'obturateur (7) à l'encontre du moyen élastique (12), **caractérisé par le fait qu'**il comporte :
- un capteur (26, 35) de mesure de la pression d'alimentation en gaz sous pression de l'actionneur pneumatique (4) de la vanne (1) et un capteur (28) de mesure du déplacement de la tige de vanne (6) ainsi que des moyens (24, 29, 30, 32) de récupération et de traitement de signaux du capteur de pression (26) et du capteur de déplacement (28), et.
- des moyens (51) pour repérer et enregistrer un signal représentatif de la contrainte subie par la tige (6) de la vanne (1) pendant le déplacement de la tige (6) de vanne et ainsi, déterminer le contact de l'obturateur (7) sur le siège (3) de vanne.

11. Dispositif suivant la revendication 10, **caractérisé par le fait que** le capteur de pression (26) est raccordé, par l'intermédiaire d'un T de raccordement (20) à un piquage (19) d'alimentation de l'actionneur pneumatique (4) de la vanne (1).

12. Dispositif suivant l'une quelconque des revendications 10 et 11, **caractérisé par le fait qu'**il comporte de plus au moins un capteur (27) d'un signal émis par un contacteur de fin de course (22a, 22b) de la vanne (1) actionné par une partie mobile de la vanne (6) en fin de course de fermeture ou d'ouverture de la vanne (1).

13. Dispositif suivant la revendication 12, **caractérisé par le fait que** le capteur de fin de course (27) est un capteur acoustique.

14. Dispositif suivant la revendication 12, **caractérisé par le fait que** le capteur de fin de course (27) est constitué par une pince ampèremétrique de détection d'un courant électrique du contacteur de fin de course (22a, 22b).

15. Dispositif suivant l'une quelconque des revendications 10 à 14, **caractérisé par le fait qu'**un capteur est associé à l'électrovanne (23) de commande d'alimentation de l'actionneur pneumatique (4), pour la détection d'un signal de commande de l'électrovanne.

16. Dispositif suivant la revendication 15, **caractérisé par le fait que** le capteur de détection d'un signal de commande de l'électrovanne est constitué par un capteur à effet Hall.

17. Dispositif suivant l'une quelconque des revendications 10 à 16, **caractérisé par le fait qu'**il comporte de plus un ensemble pneumatique (34) d'alimentation en gaz sous pression à un débit réglé de manière précise, de l'actionneur pneumatique (4), l'ensemble pneumatique (34) comportant une source de gaz sous pression et des moyens de pilotage de débit du gaz sous pression.

18. Dispositif suivant la revendication 17, **caractérisé par le fait que** le capteur de pression (35) est raccordé, par l'intermédiaire d'un T de raccordement (33) à une conduite reliant l'ensemble pneumatique (34) au piquage d'alimentation (19) de l'actionneur pneumatique (4).

19. Dispositif suivant la revendication 18, **caractérisé par le fait que** le T de raccordement (33) du capteur de mesure de pression (35) comporte un clapet de fermeture, pour refermer de manière étanche la canalisation mettant en communication l'ensemble pneumatique (34) et le piquage d'alimentation (19) de l'actionneur pneumatique.

20. Dispositif suivant l'une quelconque des revendications 10 à 19, **caractérisé par le fait qu'**il comporte un capteur de déplacement de la tige de vanne (6) constitué par un capteur de déplacement laser.

21. Dispositif suivant l'une quelconque des revendications 10 à 20, **caractérisé par le fait qu'**il comporte un capteur de déplacement de la tige de vanne (6) constitué par un capteur potentiométrique.

22. Dispositif suivant la revendication 21, **caractérisé par le fait que** le capteur de déplacement potentiométrique comporte un bras (45) dans lequel est montée une tige de serrage (46) de la tige de vanne (6), de manière à solidariser le bras (45) avec la tige de vanne (6) dans une disposition sensiblement perpendiculaire à la tige de vanne (6), une tige (50) en contact par une partie d'extrémité avec le bras (45) solidaire de la tige de vanne (6) et engagée par son autre extrémité dans un bobinage (48) de mesure de la position de la tige mobile (50) constituant un noyau plongeur et de la tige de vanne (6).

23. Dispositif suivant la revendication 22, **caractérisé par le fait qu'**une jauge de contraintes (51) est intégrée dans une crosse de serrage (46b) de la tige (46) du bras (45) et la tige de vanne (6), de manière à mesurer les variations de contraintes dues à des variations de diamètre de la tige (6) sous l'effet des efforts subis, pendant la manoeuvre de la vanne.

## Patentansprüche

1. Verfahren zur Regelung eines Ventils (1) mit pneumatischer Ein-Aus-Steuerung, um den Umlauf eines Fluids in einer Anlage zu steuern, das einen Ventilkörper (2), in dem ein Sitz (3) und ein hinterer Anschlag (13) angeordnet sind, eine Verschlussvorrichtung (7), die fest mit einer Stange (6) verbunden ist, welche im Ventilkörper (2) zwischen einer Schließstellung, in der die Verschlussvorrichtung (7) auf dem Ventilsitz (3) aufliegt, und einer Öffnungsstellung beweglich montiert ist, in der die Ventilstange (6) auf dem hinteren Anschlag (13) aufliegt, mindestens ein Mittel (12) zum elastischen Rückstellen der Stange (6) und der Verschlussvorrichtung (7) entweder in die Öffnungs- oder in die Schließstellung, ein pneumatisches Stellglied (4) mit einem beweglichen Teil (17) zum Verschieben der Ventilstange (6), und eine Druckgasquelle (34) zur Speisung des pneumatischen Stellglieds (4) über mindestens ein Elektroventil (23) aufweist, um die Ventilstange (6) und die Verschlussvorrichtung (7) gegen das elastische Mittel (12) zu verschieben, **dadurch gekennzeichnet, dass**
- die Stange (6) und die Verschlussvorrichtung (7) des Ventils (1) mit Hilfe des mit Druckgas gespeisten pneumatischen Stellglieds (4) zwischen der Öffnungs- und der Schließstellung verschoben werden,
- während mindestens eines Verschiebezyklus der Ventilstange (6) der Speisedruck des pneumatischen Stellglieds (4) und die Verschiebung der Ventilstange (6) gemessen werden,
- ein für die von der Stange (6) während des Verschiebezyklus erfahrene Beanspruchung repräsentatives Signal erfasst und gespeichert wird, um den Kontakt der Verschlussvorrichtung (7) auf dem Sitz (3) des Ventils (1) zu bestimmen, und
- eine Betriebsdiagnose des Ventils (1) ausgehend von den gemessenen Werten ausgegeben wird.

2. Verfahren nach Anspruch 1, **dadurch gekennzeichnet, dass** die Speisung des Stellglieds (4) des Ventils (1) mit Druckgas durch eine Steuerung zur normalen Betätigung des Ventils (1) der Anlage erfolgt.

3. Verfahren nach Anspruch 2, **dadurch gekennzeichnet, dass** während des Verschiebezyklus der Ventilstange (6) das Auslösen von Endschaltern (22a, 22b) des Ventils (1) lokalisiert und gespeichert wird.

4. Verfahren nach einem der Ansprüche 2 und 3, **dadurch gekennzeichnet, dass** während des Verschiebezyklus der Stange (6) des Ventils ein Steuersignal des Elektroventils (23) empfangen und gespeichert wird, das die Speisung des pneumatischen Stellglieds (4) steuert.

5. Verfahren nach Anspruch 1, **dadurch gekennzeichnet, dass** das pneumatische Stellglied (4) des Ventils (1) ausgehend von einer pneumatischen Einheit (34) mit Druckgas gespeist wird, die eine Druckgasreserve und Mittel zur genauen Steuerung des Druckgasdurchsatzes zur Speisung des pneumatischen Stellglieds (4) aufweist.

6. Verfahren nach Anspruch 5, **dadurch gekennzeichnet, dass** ausgehend vom gemessenen Druck des Speisegases für das pneumatische Stellglied (4) und von einer Betätigungsfläche des Stellglieds (4) die auf die Ventilstange (6) ausgeübte Kraft berechnet und ein Kraft/Verschiebe-Diagramm der Ventilstange erstellt wird, das ein Merkmal des mechanischen Betriebs des Ventils darstellt.

7. Verfahren nach Anspruch 6, **dadurch gekennzeichnet, dass** ausgehend vom Kraft/Verschiebe-Diagramm des Ventils der Weg der Stange (6) des Ventils zwischen der Schließstellung und der Öffnungsstellung des Ventils und die auf die Ventilstange (6) in der Schließstellung und in der Öffnungsstellung des Ventils ausgeübte Kraft bestimmt werden, wobei die Ventilstange auf dem Ventilsitz (3) bzw. auf dem hinteren Anschlag (13) aufliegt.

8. Verfahren nach einem der Ansprüche 6 und 7, **dadurch gekennzeichnet, dass** ausgehend vom Kraft/Verschiebe-Diagramm des Ventils die elastische Konstante des elastischen Rückstellmittels der Ventilstange (6) bestimmt wird.

9. Verfahren nach einem der Ansprüche 6 bis 8, **dadurch gekennzeichnet, dass** ausgehend von dem Kraft/Verschiebe-Diagramm des Ventils die Kraft bestimmt wird, die auf die Ventilstange durch eine Stopfbüchse (8) ausgeübt wird, die in einem Bereich (2a) des Ventilkörpers (2) angeordnet ist.

10. Vorrichtung zur Regelung eines Ventils (1) mit pneumatischer Ein-Aus-Steuerung, um den Umlauf eines Fluids in einer Anlage zu steuern, das einen Ventilkörper (2), in dem ein Sitz (3) und ein hinterer Anschlag (13) angeordnet sind, eine Verschlussvorrichtung (7), die fest mit einer Stange (6) verbunden ist, welche im Ventilkörper (2) zwischen einer Schließstellung, in der die Verschlussvorrichtung (7) auf dem Sitz des Ventils (3) aufliegt, und einer Öffnungsstellung beweglich montiert ist, in der die Ventilstange (6) auf dem hinteren Anschlag (13) aufliegt, mindestens ein Mittel (12) zum elastischen Rückstellen der Stange (6) und der Verschlussvorrichtung (7) entweder in die Öffnungs- oder in die Schließstellung, ein pneumatisches Stellglied (4) mit einem beweglichen Teil (17) zum Verschieben der Ventilstange (6), und eine Druckgasquelle (34) zur Speisung des pneumatischen Stellglieds (4) über mindestens ein Elektroventil (23) aufweist, um die Ventilstange (6) und die Verschlussvorrichtung (7) gegen das elastische Mittel (12) zu verschieben, **dadurch gekennzeichnet, dass** sie aufweist:
- einen Messfühler (26, 35) zum Messen des Speisedrucks des Druckgases für das pneumatische Stellglied (4) des Ventils (1), und einen Wegmesser (28) zum Messen der Verschiebung der Ventilstange (6), sowie Mittel (24, 29, 30, 32) zur Wiedergewinnung und Verarbeitung von Signalen des Druckmessfühlers (26) und des Wegmessers (28), und
- Mittel (51), um ein für die von der Stange (6) des Ventils (1) während der Verschiebung der Stange (6) erfahrene Beanspruchung repräsentatives Signal zu lokalisieren und zu speichern und so den Kontakt der Verschlussvorrichtung (7) auf dem Sitz (3) des Ventils zu bestimmen.

11. Vorrichtung nach Anspruch 10, **dadurch gekennzeichnet, dass** der Druckmessfühler (26) über ein T-Profil (20) mit einem Anschlussstutzen (19) des pneumatischen Stellglieds (4) des Ventils (1) verbunden ist.

12. Vorrichtung nach einem der Ansprüche 10 und 11, **dadurch gekennzeichnet, dass** sie außerdem mindestens einen Messfühler (27) für ein Signal aufweist, das von einem Endschalter (22a, 22b) des Ventils (1) ausgesendet wird, der von einem beweglichen Teil des Ventils (6) am Ende des Verschluss- oder Öffnungswegs des Ventils (1) betätigt wird.

13. Vorrichtung nach Anspruch 12, **dadurch gekennzeichnet, dass** der Endschalter (27) ein Schallaufnehmer ist.

14. Vorrichtung nach Anspruch 12, **dadurch gekennzeichnet, dass** der Endschalter (27) aus einer Strommesszange zur Erfassung eines elektrischen Stroms des Endschalters (22a, 22b) besteht.

15. Vorrichtung nach einem der Ansprüche 10 bis 14, **dadurch gekennzeichnet, dass** dem Elektroventil (23) zur Speisesteuerung des pneumatischen Stellglieds (4) ein Messfühler zum Erfassen eines Steuersignals des Elektroventils zugeordnet ist.

16. Vorrichtung nach Anspruch 15, **dadurch gekennzeichnet, dass** der Messfühler zum Erfassen eines Steuersignals des Elektroventils aus einem Messfühler mit Hall-Effekt besteht.

17. Vorrichtung nach einem der Ansprüche 10 bis 16, **dadurch gekennzeichnet, dass** sie außerdem eine pneumatische Einheit (34) zur Speisung des pneumatischen Stellglieds (4) mit Druckgas mit einem genau geregelten Durchsatz aufweist, wobei die pneumatische Einheit (34) eine Druckgasquelle und Mittel zur Durchsatzregelung des Druckgases aufweist.

18. Vorrichtung nach Anspruch 17, **dadurch gekennzeichnet, dass** der Druckmessfühler (35) über ein T-Profil (33) mit einer Leitung verbunden ist, die die pneumatische Einheit (34) mit dem Speise-Anschlussstutzen (19) des pneumatischen Stellglieds (4) verbindet.

19. Vorrichtung nach Anspruch 18, **dadurch gekennzeichnet, dass** das T-Profil (33) des Druckmessfühlers (35) eine Verschlussklappe aufweist, um die die pneumatische Einheit (34) und den Anschlussstutzen (19) des pneumatischen Stellglieds verbindende Rohrleitung dicht zu verschießen.

20. Vorrichtung nach einem der Ansprüche 10 bis 19, **dadurch gekennzeichnet, dass** sie einen Wegmesser der Ventilstange (6) aufweist, der aus einem Laserwegmesser besteht.

21. Vorrichtung nach einem der Ansprüche 10 bis 20, **dadurch gekennzeichnet, dass** sie einen Wegmesser der Ventilstange (6) aufweist, der aus einem Potentiometergeber besteht.

22. Vorrichtung nach Anspruch 21, **dadurch gekennzeichnet, dass** der Potentiometer-Wegmesser einen Arm (45), in den ein Einspannschaft (46) der Ventilstange (6) montiert ist, um den Arm (45) mit der Ventilstange (6) in einer zur Ventilstange (6) im wesentlichen senkrechten Stellung fest zu verbinden, eine Stange (50), die über einen Endbereich mit dem fest mit der Ventilstange (6) verbundenen Arm (45) in Kontakt steht und mit ihrem anderen Ende in eine Wicklung (48) zum Messen der Stellung der einen Tauchkern bildenden beweglichen Stange (50) und der Ventilstange (6) eingeführt ist.

23. Vorrichtung nach Anspruch 22, **dadurch gekennzeichnet, dass** ein Dehnungsmessgerät (51) in einen Klemmkreuzkopf (46b) der Stange (46) des Arms (45) und die Ventilstange (6) integriert ist, um die Dehnungsveränderungen aufgrund von Durchmesserveränderungen der Stange (6) unter der Wirkung der während der Betätigung des Ventils erfahrenen Krafteinwirkungen zu messen.

## Claims

1. Method of monitoring a pneumatically operated all or nothing valve (1) for controlling the circulation of a fluid in an installation, comprising a valve body (2) in which there are located a seat (3) and a rear stop (13), a sealing member (7) integral with a stem (6) which is movably mounted in the valve body (2) between a closing position in which the sealing member (7) abuts the valve seat (3) and an opening position in which the valve stem (6) abuts the rear stop (13), at least one resilient return means (12) for returning the stem (6) and the sealing member (7) to one of the opening and closing positions, a pneumatic actuator (4) having a movable part (17) for displacement of the valve stem (6), and a pressurised gas source (34) for supplying the pneumatic actuator (4), by way of at least one solenoid valve (23), for displacing the valve stem (6) and the sealing member (7) against the resilient means (12), **characterised in that**:
- the stem (6) and the sealing member (7) of the valve (1) are displaced between the opening and closing positions by means of the pneumatic actuator (4) supplied with pressurised gas,
- during at least one displacement cycle of the valve stem (6), the supply pressure of the pneumatic actuator (4) and the displacement of the valve stem (6) are measured
- a signal representing the stress to which the stem (6) is subjected during the displacement cycle is registered and recorded in order to determine the contact of the sealing member (7) on the seat (3) of the valve (1), and
- a diagnosis of the operation of the valve (1) is emitted on the basis of the measured values.

2. Method according to claim 1, **characterised in that** the supply of pressurised gas to the actuator (4) of the valve (1) is controlled by a normal actuating command of the valve (1) of the installation.

3. Method according to claim 2, **characterised in that**, during the displacement cycle of the valve stem (6), the release of end-of-stroke contacts (22a, 22b) of the valve (1) is registered and recorded.

4. Method according to either claim 2 or claim 3, **characterised in that**, during the displacement cycle of the valve stem (6), an operating signal for the solenoid valve (23) controlling the supply to the pneumatic actuator (4) is picked up and recorded.

5. Method according to claim 1, **characterised in that** the pneumatic actuator (4) of the valve (1) is supplied with pressurised gas from a pneumatic assembly (34) comprising a pressurised gas supply and means for the precise monitoring of the flow of pressurised gas supplying the pneumatic actuator (4).

6. Method according to claim 5, **characterised in that** the force exerted on the valve stem (6) is calculated from the measured pressure of the gas supplying the pneumatic actuator (4) and an actuating surface of the actuator (4) and a force/valve stem displacement diagram constituting a mechanical operating characteristic of the valve is plotted.

7. Method according to claim 6, **characterised in that**, from the force/valve displacement diagram, the stroke of the valve stem (6) between the valve closing position and the valve opening position and the force exerted on the valve stem (6) in the valve closing position and the valve opening position are determined, the valve stem abutting the valve seat (3) and the rear stop (13), respectively.

8. Method according to either claim 6 or claim 7, **characterised in that**, from the force/valve displacement diagram, the elastic constant of the resilient return means for the valve stem (6) is determined.

9. Method according to any one of claims 6 to 8, **characterised in that**, from the force/valve displacement diagram, the force exerted on the valve stem by a packing box (8) arranged in a part (2a) of the valve body (2) is determined.

10. Device for monitoring a pneumatically operated all or nothing valve (1) for controlling the circulation of a fluid in an installation, comprising a valve body (2) in which there are located a seat (3) and a rear stop (13), a sealing member (7) integral with a stem (6) which is movably mounted in the valve body (2) between a closing position in which the sealing member (7) abuts the valve seat (3) and an opening position in which the valve stem (6) abuts the rear stop (13), at least one resilient return means (12) for returning the stem (6) and the sealing member (7) to one of the opening and closing positions, a pneumatic actuator (4) having a movable part (17) for displacement of the valve stem (6), and a pressurised gas source (34) for supplying the pneumatic actuator (4), by way of at least one solenoid valve (23), for displacing the valve stem (6) and the sealing member (7) against the resilient means (12), **characterised in that** it comprises:
- a sensor (26, 35) for measuring the pressure of the supply of pressurised gas to the pneumatic actuator (4) of the valve (1), and a sensor (28) for measuring the displacement of the valve stem (6), as well as means (24, 29, 30, 32) for retrieving and processing signals from the pressure sensor (26) and the displacement sensor (28), and
- means (51) for registering and recording a signal representing the stress to which the stem (6) of the valve (1) is subjected during the displacement of the valve stem (6) and accordingly determining the contact of the sealing member (7) on the valve seat (3).

11. Device according to claim 10, **characterised in that** the pressure sensor (26) is connected, by way of a T-shaped connecting member (20), to a branch (19) for supplying the pneumatic actuator (4) of the valve (1).

12. Device according to either claim 10 or claim 11, **characterised in that** it additionally comprises at least one sensor (27) for a signal emitted by an end-of-stroke contact (22a, 22b) of the valve (1), which contact is actuated by a movable part of the valve (6) at the end of the closing or opening stroke of the valve (1).

13. Device according to claim 12, **characterised in that** the end-of-stroke sensor (27) is an acoustic sensor.

14. Device according to claim 12, **characterised in that** the end-of-stroke sensor (27) is constituted by a clamp-on probe for detecting an electric current of the end-of-stroke contact (22a, 22b).

15. Device according to any one of claims 10 to 14, **characterised in that** a sensor is associated with the solenoid valve (23) controlling the supply to the pneumatic actuator (4), for detecting a solenoid valve operating signal.

16. Device according to claim 15, **characterised in that** the sensor for detecting a solenoid valve operating signal is constituted by a Hall-effect sensor.

17. Device according to any one of claims 10 to 16, **characterised in that** it additionally comprises a pneumatic assembly (34) for supplying the pneumatic actuator (4) with pressurised gas at a precisely controlled flow rate, the pneumatic assembly (34) comprising a pressurised gas source and means for monitoring the flow rate of the pressurised gas.

18. Device according to claim 17, **characterised in that** the pressure sensor (35) is connected, by way of a T-shaped connecting member (33), to a conduit joining the pneumatic assembly (34) to the supply branch (19) for the pneumatic actuator (4).

19. Device according to claim 18, **characterised in that** the T-shaped connecting member (33) of the pressure-measuring sensor (35) comprises a closing flap for closing in a leak-tight manner the conduit connecting the pneumatic assembly (34) and the supply branch (19) for the pneumatic actuator.

20. Device according to any one of claims 10 to 19, **characterised in that** it comprises a valve stem (6) displacement sensor constituted by a laser displacement sensor.

21. Device according to any one of claims 10 to 20, **characterised in that** it comprises a valve stem (6) displacement sensor constituted. by a potentiometric sensor.

22. Device according to claim 21, **characterised in that** the potentiometric displacement sensor comprises an arm (45) in which there is mounted a rod (46) for clamping the valve stem (6) so as to join together the arm (45) and the valve stem (6) in an arrangement substantially perpendicular to the valve stem (6), a rod (50) which is in contact in a bottom portion with the arm (45) integral with the valve stem (6) and which is engaged at its other end in a winding (48) for measuring the position of the movable rod (50) constituting a solenoid plunger and of the valve stem (6).

23. Device according to claim 22, **characterised in that** a strain gauge (51) is integrated in a hook-like member (46b) for clamping the rod (46) of the arm (45) and the valve stem (6), so as to measure the variations in stress due to variations in the diameter of the stem (6) under the effect of the forces undergone during the manoeuvring of the valve.
